Europäisches Patentamt

European Patent Office

Office européen des brevets

Veröffentlichungsnummer: **0 285 012**

**A1**

# EUROPÄISCHE PATENTANMELDUNG

(21) Anmeldenummer: 88104794.8

(22) Anmeldetag: 25.03.88

(51) Int. Cl.⁴ **F16D 59/02**

(30) Priorität: 31.03.87 DE 3710732

(43) Veröffentlichungstag der Anmeldung:
05.10.88 Patentblatt 88/40

(84) Benannte Vertragsstaaten:
CH DE ES FR GB IT LI

(71) Anmelder: **ZAHNRADFABRIK FRIEDRICHSHAFEN AKTIENGESELLSCHAFT**
**Löwentaler Strasse 100 Postfach 2520**
**D-7990 Friedrichshafen 1(DE)**

(72) Erfinder: **Winkelmann, Siegfried**
**Birkensteige 15**
**D-7992 Tettnang(DE)**
Erfinder: **Schneider, Rudolf**
**Dornierstrasse 19**
**D-7996 Meckenbeuren(DE)**

(54) **Einstellvorrichtung für eine Elektromagnet-Federdruckbremse.**

㊗ Der Magnetkörper dieser Federdruckbremse besteht aus durch einen gemeinsamen Kunststoffmantel (14) zusammengehaltenen, ringförmig angeordneten Einzelteilen (11, 12, 13) und einem diesen axial vorgeordneten ringscheibenförmigen Rücken (17). In den zugehörigen Motorflansch (1) sind die alten Schrauben (9) eingedreht, welche durch den Kunststoffmantel (14) zwischen den einzelnen Seitenschenkelstücken (11, 12) hindurchgesteckt sind. Die Schrauben durchdringen erfindungsgemäß dabei eine motorseitige Einstellhülse (21), welche mit ihrem Außengewinde innerhalb des Kunststoffmantels (14) in das Innengewinde der Gewindebuchse (8) eingreift, welche im Kunststoffmantel (14) drehfest gehalten und axial gegen den Rücken (17) des Magnetkörpers abgestützt ist. Der Kunststoffmantel (14) bleibt dabei frei von Festigkeitsbeanspruchungen bzw. Gewindebohrungen und kann in seinem axialen Abstand gegenüber dem Motorflansch (1) stufenlos eingestellt werden, indem durch einen Zwischenraum zwischen Motorflansch (1) und Kunststoffmantel (14) ein leichter Zugriff zu den Schlüsselflächen (22) der Einstellhülsen (21) von der Seite her gegeben ist.

FIG. 1

## Einstellvorrichtung für eine Elektromagnet-Federdruckbremse

Die Erfindung betrifft eine Einstellvorrichtung nach dem Oberbegriff des Anspruches 1, welcher ausgeht von der PCT EP 85/00051, die einen durch eine Kunststoffumspritzung zusammengehaltenen, aus einzelnen Eisenformteilen gebildeten Magnetkörper aufweist, bei welchem der gleiche Kunststoff auch die Spule als Mantel außen umgibt. Bisher war der Magnetkörper lediglich über Halteschrauben am Motorflansch befestigt, welche die stirnseitige Rückwand des Magnetkörpers gegen im Kunststoffmantel eingelegte unverschiebliche Distanzhülsen anpreßten. Zum Nachjustieren pflegte man, nicht gezeigte Distanzscheiben zwischen Motorflansch und Distanzhülsen zu entfernen.

Dies erforderte indessen jeweils das völlige Herausschrauben der Halteschrauben und sicherte keine stufenlose Fein-Einstellbarkeit.

Weiterhin erwies sich bei der Realisierung unterschiedlicher Magnetkörpergrößen und der Verwendung wechselnder Querschnitte und Materialzusammensetzungen, daß oft zeitraubende Einstellarbeiten infolge der wechselnden Kunststoff-Dehnwerte oder auch der unterschiedlichen Reibkörper-Dicken in Kauf zu nehmen waren. Die Anbringung von sich im Kunststoff selbst axial abstützenden Gewindehülsen kam wegen dessen geringer Festigkeit bzw. Maßhaltigkeit nicht in Betracht.

Die Aufgabe der Erfindung wird daher darin gesehen, den Stand der Technik insbesondere so zu verbessern, daß eine stufenlose Einstellmöglichkeit unter Vermeidung von besonderen Festigkeitsbeanspruchungen auf den Kunststoffmantel geschaffen wird.

Die Lösung wurde mit den kennzeichnenden Merkmalen des Anspruches 1 insbesondere dadurch erreicht, daß Einstellvorrichtungen mit je zwei zusammenwirkenden Distanzhülsen-Einzelteilen anstelle einer fertig abgelenkten, starr umspritzten zur Verwendung gelangten, welche Dank Schraubenschlüsselprofilen auf ihren Einstellhülsen unterhalb einer axialen Öffnung zwischen Kunststoffmantel und Motorflansch von der Seite her leicht zugänglich und die genaue Einstellbarkeit auch im vormontierten Zustand ermöglichen. Dabei wird das Gehäuse des Magnetkörpers keinen besonderen Festigkeitsbeanspruchungen durch eingeschnitte Gewinde ausgesetzt.

Weitere Vorteile werden durch die Unteransprüche erreicht. Sieht man im Kunststoffmantel statt dem Umspritzen der Gewindebuchse lediglich Öffnungen zum losen Einstecken derselben vor, wobei Drehsicherungen mit Nocken an der Buchse, die in Schlitze außerhalb der Öffnungen eingreifen, vorgesehen werden müßten, so können Werkstoffqualitäten, Wandstärken und Gewinde der Buchsen einfach ausgetauscht werden. Sieht man ausreichend große radiale Zugriffsmöglichkeiten für Schraubenschlüssel zu den in die Gewindebuchsen geschraubten Einstellhülsen zwischen Motorflansch und Kunststoffmantel vor, so bietet sich die Möglichkeit, auch jederzeit nach vollzogener Endmontage am Motorflansch noch eine Feinjustage des Magnetkörper-Abstandes vorzunehmen und Maßfehler oder Abrieb der Bremsscheibe usw. kompensieren zu können. Sollte eine Nachjustierung ohne größere Betriebsunterbrechung nötig werden, so braucht an der eigentlichen Bremse nichts demontiert werden, sondern lediglich nach kurzem Lösen der Halteschrauben eine Verstellung der Einstellhülsen vorgenommen werden.

Die Erfindung ist nicht auf die Merkmalskombination der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

Die Erfindung wird im folgenden anhand der beiden schematischen Zeichnungen näher erläutert:

Fig. 1 zeigt einen Längsschnitt einer Motorbremse mit angebautem Magnetkörper;

Fig. 2 zeigt einen Querschnitt zu Fig. 1.

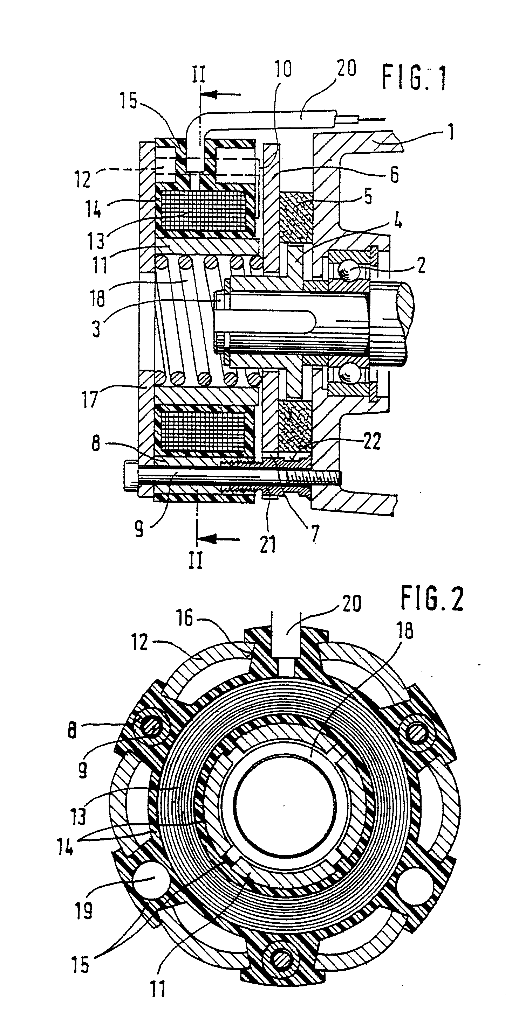

In Fig. 1 legt sich an den Motorflansch 1, welcher ein Wellenlager für das bremsenseitige Wellenende 3 umfaßt, stirnseitig die aus Bremsnaben-Flansch 4 und Reibkörpern 5 zusammengesetzte Bremsscheibe im stromlosen Zustand an. Die auf der Motor abgewandten Seite der Reibkörper 5 angeordnete Ankerscheibe 6 wird im Beispiel lose radial geführt, sowohl vom aus dem Wellenlager 2 vorspringenden Wellenende 3 als auch durch Ausnehmungen bzw. Bohrungen 7 an ihrem Außenradn hindurchgreifende Einstellvorrichtungen 8/21, durch welche die Halteschrauben 9 gesteckt sind, deren Gewinde in den Motorflansch 1 eingreift und die auch die Ankerscheibe 6 gegen Mitdrehen festhalten. Bei extrem kurzem Wellenende 3 könnte die Ankerscheibe 6 auch durch die Einstellvorrichtung 8/21 alleine ausreichend geführt sein. In axialer Richtung weist die Ankerscheibe 6 auf jeweils einer ihrer Stirnflächen einen Luftspalt 10 auf gegenüber Stirnflächen von Seitenschenkelstücke 11, 12, aus magnetisierbarem Werkstoff, die entlang dem äußeren und inneren Umfang der Wicklung 13 bzw. des diese umschließenden Kunststoffmantels 14 koaxial zum Wellenende 3 befestigt sind. Die z. B. aus gebogenen Guß-bzw. Blechstücken bestehenden Seitenschenkelstücke 11, 12 haben dabei in Umfangrichtung Abstand zueinander, und in die vorgesehenen Lücken können Auskragungen 15 des Kunststoffmantels 14 hineingreifen, welche zusätzlich alte Nuten 16 zum radialen Arrettieren der Seitenschenkelstücke 11, 12 haben können. Die Biegeradien der einzelnen Teilstücke 11, 12 brauchen hierbei nicht unbedingt auf das Zentrum des gesamten Magnetkörpers selbst bezogen sein.

In axialer Richtung werden die Seitenschenkelstücke 11, 12 zwischen der Ankerscheibe 6 einerseits und einer vorzugsweise gleichartig bemessenen Ringscheibe, die den Rücken 17 des U-Querschnittes des hier aus den einzelnen Seitenschenkelstücken 11, 12 bestehenden Magnetkörpers bilden, festgehalten und gleichzeitig gegen die motorabgewandte Stirnseite der inneren und äußeren Seitenschenkelstücke 11, 12 zwecks guten Magnetstromdurchganges auf Anlage gehalten. In den innerhalb der inneren Seitenschenkelstücke 11 verbleibenden Freiraum zwischen Rücken 17 und Ankerscheibe 6 ist/sind Druckfeder(n) 18 mit Vorspannung eingesetzt, welche nur bei Stromdurchgang durch die Wicklung 13 infolge der daraus verursachten Anziehungskraft des Magnetkörpers 11, 12, 13, 17 von der sich dann von den Reibkörpern 5 abhebenden Ankerscheibe 6 unter Überwindung des Luftspaltes 10 zusammengedrückt werden können.

Die Stromversorgung der Wicklung 13 erfolgt dabei über das in den Kunststoffmantel 14 in einer von diesen Auskragungen 15 eingebettete Kabel 19, welches hierbei gegen Beschädigungen günstig geschützt ist. Ebenfalls, allerdings in axialer Richtung, in den Kunststoffmantel 14 im Bereich der speichenartig vorhandenen Lücken bzw. der Auskragungen 15 eingebettet untergebracht sind die Einstellvorrichtungen 8/21, durch welche die alten Schrauben 9 gesteckt sind. Da die Einstellvorrichtungen auf dem gleichen Durchmesser wie die äußeren Seitenschenkelteilstücke 11, 12 liegen, wird der Bauraum durch entsprechend vergrößerte Außenabmessungen des Magnetkörpers gespart. Auf dem gleichen Durchmesser können in weitere Axialbohrungen des Kunststoffmantels 14 im Bereich der Aussparungen 15 auch einzelne Druckfedern 18 auf etwa dem gleichen Durchmesser wie die Einstellvorrichtungen untergebracht werden, so daß auch der innere Freiraum des Magnetkörpers verkleinert bzw. für andere Zwecke genutzt werden könnte. Die Einstellvorrichtung besteht aus einer gegenüber dem Kunststoffmantel 14 drehfest gehaltenen Gewindebuchse 8, deren Innengewinde in Richtung Motorflansch 1 weist und sich in Eingriff befindet mit einem Außengewinde einer Einstellhülse 21, welche mit ihrer dem Gewinde gegenüber gelegenen Stirnseite am Motorflansch 1 axial abgestützt ist. Im Beispiel ist die Einstellhülse mit einer Schlüsselfläche 22 versehen und kann durch einen Freiraum zwischen Motorflansch und der diesem zugewandten Stirnseite des Kunststoffmantels 14 problemlos von der Seite her erreicht werden. Nach dem Lockern der Halteschrauben 9 können hiermit die Einstellhülsen mehr oder weniger weit in die verdrehgesicherten Gewindebuchsen 8 ein-oder abgeschraubt werden und bieten daher eine leichte Ausgleichsmöglichkeit für Maßfehler oder Reibkörperabnutzungen usw., ohne daß der Kunststoffmantel bzw. die Isolierung des Magnetkörpers dabei festigkeitsmäßig besonders beansprucht werden.

Bezugszeichen1 Motorflansch
2 Wellenlager
3 Wellenende
4 Bremsflansch
5 Reibkörper
6 Ankerscheibe
7 Ausnehmungen in 6
8 Gewindebuchse
9 Halteschraube
10 Luftspalt
11 Seitenschenkelstücke innen
12 Seitenschenkelstücke außen
13 Wicklung
14 Kunststoffmantel
15 Auskragungen
16 Haltenuten
17 Rücken des Magnetkörpers
18 Druckfeder(n)
19 alternative Druckfedertaschen
20 Kabel
21 Einstellhülse
22 Schlüsselflächen

## Ansprüche

1. Einstellvorrichtung für eine Elektromagnet-Federdruckbremse,
- bei welcher ein Magnetkörper mit einem U-Querschnitt vorhanden ist, der aus mehreren ringförmig angeordneten Eisenformteil-Einzelquerschnitten (11, 12, 13) und einem kreisringförmigen Rücken (17) besteht,
- und welche mittels einer speichenartige Lücken zwischen ihnen ausfüllender und sich auch gegenüber einer Wicklung (13) lagefixierenden Kunststoffmasse (14) zusammengehalten werden,
- wobei der Magnetkörper (11, 12, 13, 17) mittels Halteschrauben (9) an einem eine Gegenreibfläche bildenden Motorflansch (1) befestigt ist,
- und wobei auf einem aus dem Motorflansch (1) herausragenden Wellenende (3) ein Bremsflansch (4) mit Reibkörper (5) gehaltert ist,

- der bei stromlosen Magneten gegen den Motorflansch (1) anpreßbar ist von einer auf dem Wellenende (3) drehfesten, aber axial verschieblichen Ankerscheibe (6), welche magnetseitig druckbelastet ist durch eine Feder (18), die sich rückseitig an eine den Rücken (17) des Magnetkörpers bildende und stirnseitig gegen den Kunststoffmantel (14) und die axial gerichteten inneren und äußeren Seitenschenkelstücke (11, 12) des Magnetkörpers anlegt,

- wobei der Rücken (17) am Motorflansch (1) mittels mehrerer den Kunststoffmantel (14) durchdringender Halteschrauben (9) befestigt ist,

dadurch **gekennzeichnet,** -daß die Halteschraube (9) eine vom Kunststoffmantel (14) drehfest gehaltene und mit ihrer einen Stirnseite am Magnetkörper-Rücken (17) abgestützte Gewindebuchse (8) aufweist,

- deren Innengewinde auf dem Außengewinde einer Einstellhülse (21) läuft, deren magnetabgewandte Stirnseite am Motorflansch (1) abgestützt ist,

- wobei die Gewindebuchse (8) und die Einstellhülse (21) von der gemeinsamen Halteschraube (9) durchdrungen werden, deren Gewinde im Motorflansch (1) greift an deren Kopf auf der Außenseite des Magnetkörper-Rückens (17) liegt.

2. Vorrichtung nach Anspruch 1, dadurch **gekennzeichnet,** daß die Gewindebuchse (8) im Kunststoffmantel (14) lose eingelegt ist, aber durch auf ihr angebrachten Nocken, welche in entsprechende Schlitze im Kunststoffmantel (14) eingreifen, verdrehgesichert ist.

3. Vorrichtung nach Anspruch 1, dadurch **gekennzeichnet,** daß zwischen Kunststoffmantel (14) und Motorflansch (1) radiale Zugriffsöffnungen zur Einstellhülse (21) bzw. deren Schlüsselfläche (22) vorgesehen sind.

FIG. 1

FIG. 2

ZF 6111 F

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-3 424 595  (ORTLINGHAUS-WERKE)<br>* Figur 1; Seite 7, Zeile 32 - Seite 8, Zeile 13 * | 1 | F 16 D  59/02 |
| A | | 3 | |
| | --- | | |
| Y | WO-A-8 605 028  (Z.F.)<br>* Figur 1 * | 1 | |
| A | | 2 | |
| | --- | | |
| A | DE-U-7 618 400  (BRINKMANN)<br>* Seite 4, Zeilen 1-16; Figur *<br>----- | 1,3 | |

| RECHERCHIERTE SACHGEBIETE (Int. Cl.4) |
|---|
| F 16 D  59/00<br>F 16 D  65/00 |

Der vorliegende Recherchenbericht wurde für alle Patentansprüche erstellt

| Recherchenort | Abschlußdatum der Recherche | Prüfer |
|---|---|---|
| BERLIN | 28-06-1988 | STANDRING M A |

EPO FORM 1503 03.82 (P0403)